# EUROPEAN PATENT APPLICATION

(11) **EP 1 431 935 A1**
(43) Date of publication of application: **23.06.2004**
(21) Application number: 03028672.8
(22) Date of filing: 16.12.2003
(51) Int. Cl.: G07F 17/32, G07F 7/08

(54) **System, server and method for integrated management of casino and hotel**

(30) Priority: 16.12.2002 JP 2002364496
(71) Applicant: Aruze Corp., Tokyo 135-0063 (JP)
(72) Inventor: Fujimoto, Jun, Tokyo 135-0063 (JP)
(74) Representative: HOFFMANN - EITLE

(57) **Abstract**

To allow a lodger to enjoy various services in a hotel and a casino, and to provide event services related to the casino, an integrated casino and hotel management system comprises a user management server for managing a user of a casino and a hotel, a game server for managing services related to games, a communication network for interconnecting the user management server and the game server, and a portable terminal connected to the user management server and the game server through the communication network, wherein the user management server and the game server provide services of the casino and the hotel through the communication network and the portable terminal.

## Description

### BACKGROUND OF THE INVENTION

### 1. Field of the Invention

This invention relates to an integrated casino and hotel management system, sever and method to provide various services ranging from lodging in the hotel to playing in the casino for a user to enjoy by means of a single integrated card handed over to or distributed to the user.

### 2. Description of the Related Art

A system for hotels is known that manages checkout account settlement using a card handed over to a lodger. To put it concretely, details of the information registered in a guest book when a guest checks in are inputted into a lodging card, and services such as meals are provided according to the lodging card without cash. In case the guest uses facilities in the hotel, the purchase history or the like is recorded on the lodging card and used for settling account at the time of checkout.

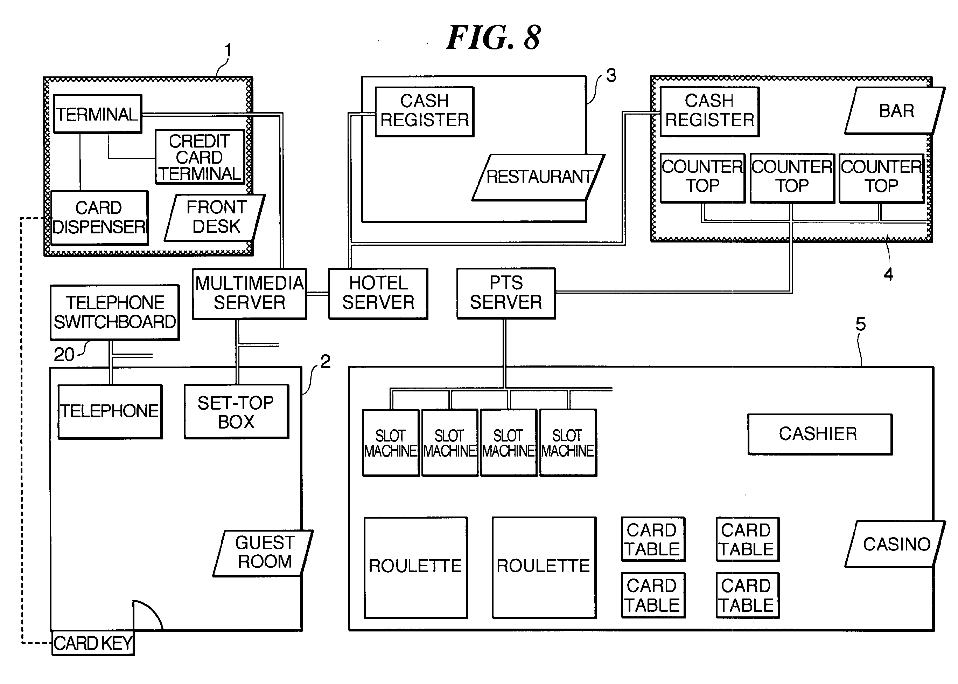

On the other hand, the casino business (officially recognized amusement places where various gambles such as roulette are permitted), like the hotel business mentioned above, is surely cashless-oriented, and account settlement systems have been proposed to permit playing games using a credit card without cash. Such account settlement systems for use in casinos and hotels have been conventionally known (see FIG. 8).

Incidentally, in Las Vegas, the home of the casino, the hotel service is often provided together with the casino service.

However, the account settlement system for hotels is still independent of the account settlement system for casinos at the moment. Therefore, there are problems when an attempt is made to use the account settlement system for hotels as it is in a special field, casinos.

For example, to make account settlement with cards possible in casinos, it is necessary to take into consideration the prevention of using excessive money by setting an upper limit, security, etc. because unpredictable debt may occur as the users are absorbed in playing in spite of the presence of use limits in their cards.

Presence of plural systems independent of each other leads to inefficient facility investment. Besides, inability of exchanging information between account settlement systems in the hotel and casino due to the independence leads to inefficient facility investment and lack of careful services to the users.

Therefore, the object of this invention is to provide integrated casino and hotel management system and server which allow users to enjoy easily various services and provide event services related to the casino or the like.

### SUMMARY OF THE INVENTION

In one of the aspects of the present invention, an integrated casino and hotel management system comprises, a user management server for managing a user of a casino and a hotel, a game server for managing services related to games, a communication network for interconnecting the user management server and the game server, and a portable terminal connected to the user management server and the game server through the communication network, wherein the user management server and the game server provide services of the casino and the hotel through the communication network and the portable terminal.

In another aspect of the present invention, a casino and hotel system comprises, an integrated casino and hotel management system having, a user management server for managing a user of a casino and a hotel, a game server for managing services related to games, a communication network for interconnecting the user management server and the game server, and a portable terminal connected to the user management server and the game server through the communication network, wherein the user management server and the game server provide services of the casino and the hotel through the communication network and the portable terminal, a hotel facility to be used by the user, the use being managed by the user management server; and a casino for the user to play games in, the services related to the games being managed by the game server.

Here, the user management server may comprise a casino providing server for providing event services related to the games to the user. The casino providing server is included in the user management server, and may be included in the game server or in the hotel server.

In another aspect of the present invention, an integrated casino and hotel management server, comprises, event guiding means for giving event information; and event executing means for executing an event based on the event information.

In another aspect of the present invention, a method of managing a casino and a hotel, comprises the steps of, storing user data of a user of the casino and the hotel in a user management server, transmitting the user data to a game server, so as to provide event information based on the user data, connecting a portable terminal carried by the user to the user management server and to the game server.

The term, "user data," typically refers to pieces of data stored for managing personal information of users of the casino and/or the hotel. Examples of the user data include, but are not limited to, name, address, room # (number) for those who stay in the hotel, a history of games (if the one played any), and the like. The term, user data, may refer to guest property in this specification.

In another aspect of the present invention, a casino and hotel management method comprises the steps of, executing the integrated casino and hotel management method having the steps of, storing user data of a user of the casino and the hotel in a user management server, transmitting the user data to a game server, so as to provide event information based on the user data, connecting a portable terminal carried by the user to the user management server and to the game server, managing the use of a hotel facility by the user by means of the user management server; and managing services related to games played by the user in the casino by means of the game server.

In another aspect of the present invention, an integrated casino and hotel management method using an integrated casino and hotel management server connected to a portable terminal carried by a user of the casino and the hotel through a communication network, comprises the steps of, giving information on events related to casino games to the portable terminal carried by a user chosen according to the guest property of the user; and executing event services related to the casino games using the portable terminal as an interface.

To solve the above-described problems, the integrated casino and hotel management system of one of the aspects of this invention comprises: a user management server for managing a hotel user; a game server for managing services related to casino games played in the hotel; a communication network for interconnecting the user management server and the game server; and a portable terminal connected to the user management server and the game server through the communication network, and the user management server and the game server cooperate to provide services related to casino games through the communication network and the portable terminal.

Typically the portable terminal is carried by the hotel user such as a lodger of the hotel. With the above constitution, the respective servers provide or manage various services related to using the hotel such as lodging and playing casino games. The servers are connected to the portable terminal carried by the user through the communication network, so that the servers are made to cooperate by means of a card such as an IC card provided to the user and that services related to the casino games are provided to the user through the portable terminal.

Incidentally, the term "user" as used herein refers to one who uses the lodging facility like a hotel or plays in the casino without staying overnight as well as one who stays overnight.

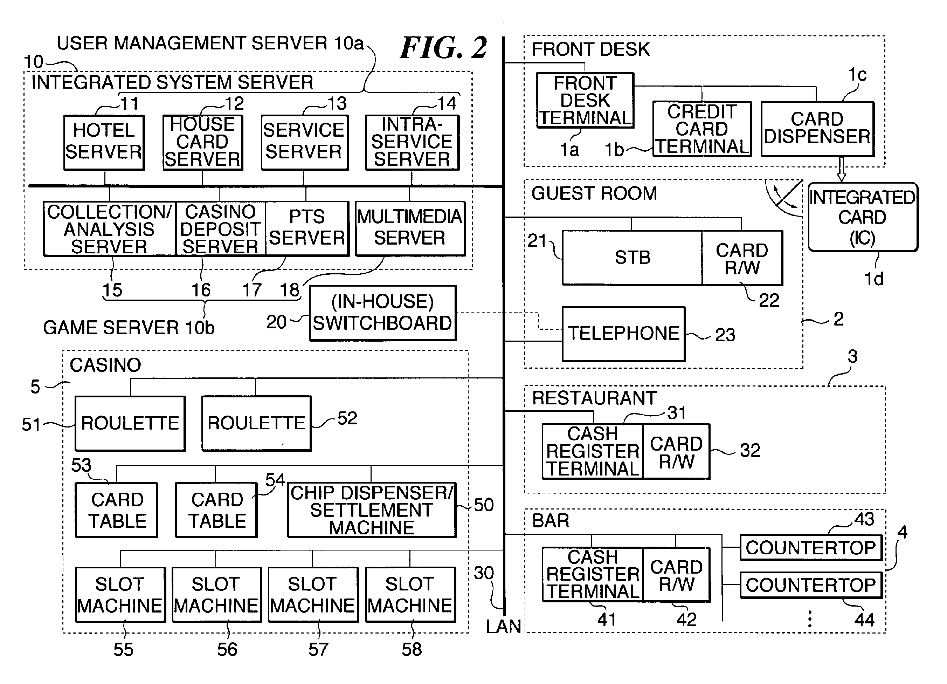

According to another aspect of this invention, in reference to FIG. 2, for example, an integrated system server 10 as an integrated service providing means allows servers (a hotel server 11, a house card server 12, a service server 13, an intra-service server 14, a collection/analysis server 15, a casino deposit server 16, a PTS server 17, a multimedia server 18) to cooperate according to a unique ID recorded on a single integrated card given to the user at the time of checking in. Here, the integrated system server 10 is comprised of a user management server 10a and a game server 10b. The user management sever 10a is comprised of hotel server 11, house card server 12, service server 13 and intra-service server 14. The game server 10b is comprised of collection/analysis server 15, casino deposit server 16, PTS server 17 and multimedia server 18.

Here, the term "integrated" is used in relation to providing both the hotel service such as lodging and the casino service such as permitting the users to play games. Therefore, an integrated card is a single card with which the user can receive both of the services. An integrated service refers to a service including both of the services. With the system and method in an embodiment of this invention, various services ranging from lodging to playing casino games, substantially any and all types of services, can be provided and enjoyed.

Thus, the integrated system server 10 can provide and manage the lodging service and services related to casino games provided through the portable terminal as a communication tool.

Incidentally, the integrated casino and hotel management system of this invention may be arranged that the cooperation of the user management server and the game server is made with the card given to the user. The card mentioned here is one on which information is recorded. To describe it more in detail, the card is an information input/output card to which information can be written and from which information can be read. Typically, the card is an IC card but is not limited to it, and may be a magnetic card.

Here, the cooperation is made with a unique code allocated to the user and recorded on the IC card.

The integrated casino and hotel management system of this invention may also comprise a casino providing server for providing event services related to the casino games to the user.

Typically, the casino providing server is provided separately from the game server, gives information on events related to the casino games to the user, provides the event service to the user who wants to participate.

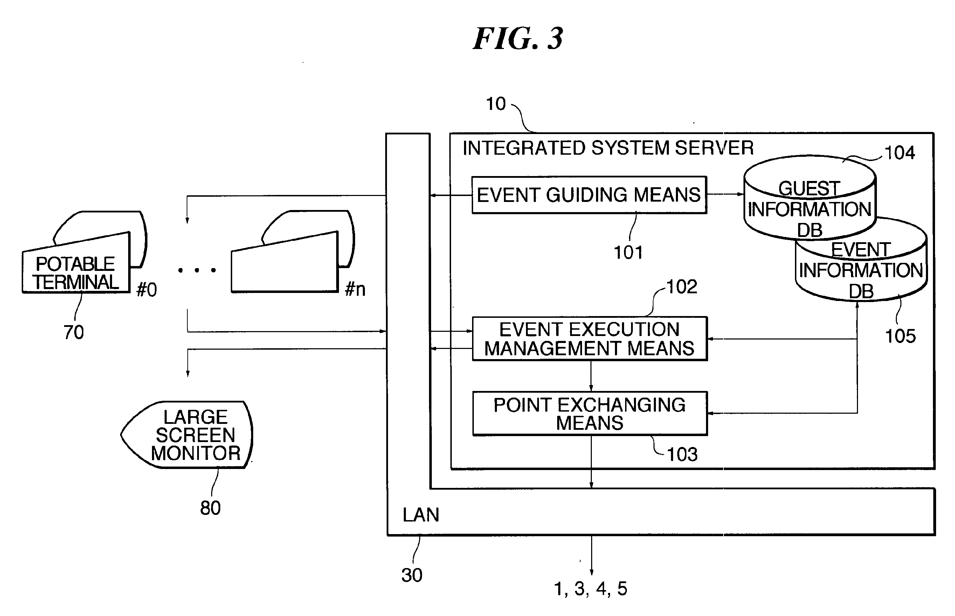

The integrated casino and hotel management server of another aspect of this invention is the one as shown for example in FIGs. 2 and 3 connected through a communication network 30 to a portable terminal 70 carried by the user, comprising: an event guiding means 101 for giving information on events related to the casino games to the portable terminal 70 carried by the user, and an event execution management means 102 for executing event services related to the casino games using the portable terminal 70 as an interface.

According to another aspect of the invention, in reference to FIG. 3, for example, the event guiding means 101 mounted on the integrated system server 10 refers to a guest information DB 104 and acquires the guest's properties such as the preference of the user and/or user data and gives information on events such as the horse race game to the portable terminal 70 carried by the chosen user.

On the other hand, the user uses the portable terminal 70 in hand as a communication tool, indicates the intention of participation in the event, chooses an expected horse, and sees the horse race displayed on the large screen monitor 80. Event details displayed on the large screen monitor 80 and data about the expected horse, etc. produced as the user operates the portable terminal 70 are taken into the event execution management means 102 to execute and manage the event. The result of the event executed is notified to the portable terminal 70 in the user's hand by means of the event execution management means 102.

The integrated casino and hotel management server of another aspect of this invention is also characterized in that, as shown in FIG. 3, for example, the event execution management means displays the event details on the display monitor installed in the site and executes the event service by interaction with the portable terminal 70 carried by each of the users participating in the event.

The integrated casino and hotel management server of another aspect of this invention is also characterized, as shown in FIG. 3, for example, by comprising a point exchanging means 103 for reflecting the points acquired as the user participated in the event on the account settlement for the casino or lodging in the hotel.

Also, the invention can be fully understood, referring to the following description in details. Further extensive applications of the invention will be apparent from the following description in details. However, it should be noted that the detailed description and specific examples are preferred embodiments of the invention, only for the purpose of the description thereof. Because it is apparent for the person ordinary skilled in the art to modify and change in a variety of manners, within the scope and spirits of the invention.

The applicant does not intend to dedicate any disclosed embodiments to the public, and to the extent any disclosed modifications or alterations may not literally fall within the scope of the claims, they are considered to be part of the invention under the doctrine of the equivalents.

### BRIEF DESCRIPTION OF THE DRAWINGS

FIG. 1 is a conceptual drawing cited for explaining a business model embodied with the integrated casino and hotel management system according to the invention.

FIG. 2 is a block diagram showing an example of the system constitution of the integrated casino and hotel management system according to the invention.

FIG. 3 is a block diagram, functionally extended, showing only part related to this invention of the integrated system server shown in FIGs. 1 and 2.

FIG. 4 is a flowchart cited for explaining the function of the integrated server shown in FIG. 3.

FIG. 5 is a flowchart cited for explaining the function of the integrated server shown in FIG. 3.

FIG. 6 is a flowchart cited for explaining the function of the integrated server shown in FIG. 3.

FIG. 7 is a block diagram cited for explaining the constitution of physical interconnection between the integrated system server and the terminals placed in various facilities in the hotel.

FIG. 8 is a block diagram cited for explaining the constitution of a conventional system in which a hotel account settlement system and a casino account settlement system are independent of each other.

### DETAILED DESCRIPTION OF THE PREFERRED EMBODIMENT

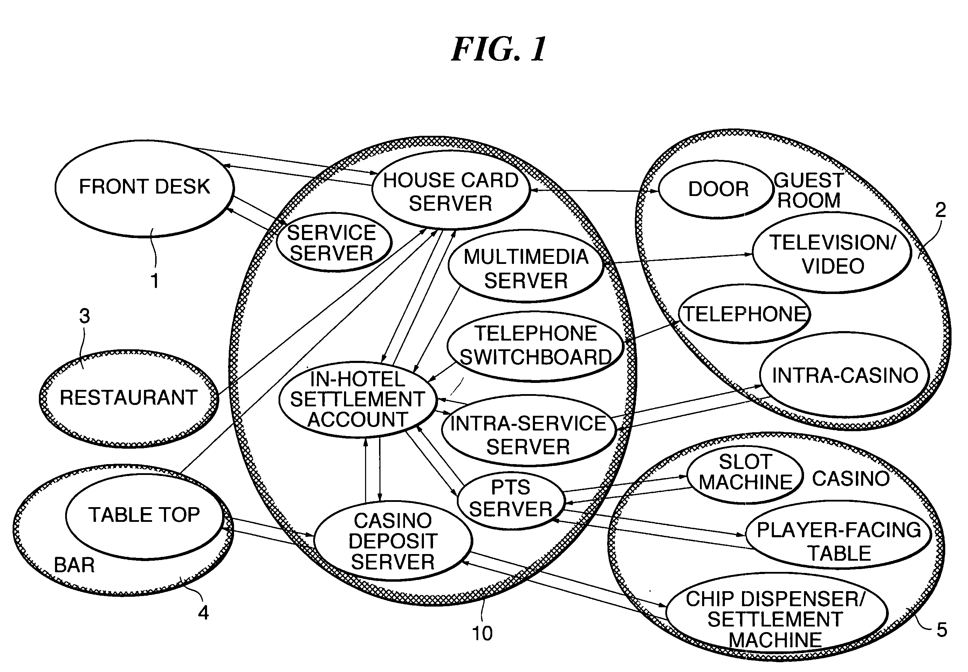

FIG. 1 is a conceptual drawing cited for explaining a business model embodied with the integrated casino and hotel management system according to the invention.

In the example shown here, the hotel provides casino service as well as hotel service. It is arranged that a user or lodger can enjoy services of various facilities in the hotel ranging from entering and leaving a guest room to playing in the casino by means of an integrated card 1d (see FIG. 2) constituted for example as a non-contact IC card handed over at the time of checking in. It is also arranged that a portable terminal is lent to the lodger to allow the lodger to participate in the casino game in various places of facilities in the hotel including the guest room, using the portable terminal as a communication tool.

Here, the IC card comes in contact type and non-contact type. The two types employ different methods of communication with a reader/writer. With the contact type, when the card is inserted into the reader/writer, the metallic terminal on the card surface comes into contact with the contact point of the reader/writer to supply power and make communication.

In contrast, with the non-contact type, power supply and communication are made between a coil antenna built in the card and an antenna (reader/writer) connected to a host. Therefore, no metallic terminal is exposed on the card surface. The card is convenient as information can be exchanged simply by holding the card in front of the card reader and is used for controlling entry into and exit from a room or the like. Telephone cards of telecommunications companies and IC-card season tickets (a card with integrated functions of season ticket and IO-card™) of railroad companies are of the non-contact type, already in use.

The CPU (central processing unit) of the contact IC card functions as power is supplied through the contact point of the reader/writer. The CPU of the non-contact IC card is divided into two types, one that receives power from a battery provided in the card and the other that functions by receiving power through an antenna without a battery in the card.

The IC card is higher in security than the magnetic stripe card. The magnetic stripe card and the IC card are the same in that the card cannot be read without using a dedicated card reader. However, reading the written contents of the magnetic card is simple once a card reader is available. In contrast, reading the written contents of the IC card requires some degree of special knowledge even when a card reader is available. In case of an IC card with a CPU, a high degree of coding can be realized, which is extremely difficult to decode.

The IC card has a memory capacity approximately 100 times or larger than that of the magnetic card and can also have a built-in CPU so as to cope with multiple applications (installing multiple applications on a single card). Therefore, it is possible to carry out totally different services (applications) with a single card.

The IC card comes in either with or without a CPU. The IC card with a CPU is capable of performing operations by itself. Therefore, it is possible to enhance security by applying advanced processes to the verification between the card and a host and to the coding of communication data. In contrast, the IC card without a CPU is also called the IC memory card and is used to write and read data. It has the same function as the floppy disk although they are different in shape and type. Absence of CPU makes developing the system easy.

FIG. 1 shows a front desk 1, a guest room 2, a restaurant 3, a bar 4, and a casino 5. These facilities in the hotel are connected through respective terminals (not shown) to a group of various servers functioning as an integrated casino and hotel management unit 10 (hereinafter called the integrated system server 10), and also connected each other organically by means of an integrated card 1d (see FIG. 2) as a medium serving as a house card handed over to the lodger, the user.

The group of various servers are related each other through a unique code (key) , such as a guest number, for example, allocated to the lodger recorded on the integrated card 1d.

The front desk 1 is connected through a terminal (not shown) to a house card server and a service server. Each server manages an in-hotel settlement account for the lodger and issues reservation tickets for shows and events, etc, respectively.

As for the guest room 2, connections are made through a terminal (not shown) between the door portion and the house card server, between a television/video and a multimedia server, between a telephone and a telephone switchboard, and between an intra-casino (to be described later) and an intranet server. Open/close control of the door, services of video on-demand, game on-demand, and lodging account settlement through an STB (set-top box), telephone switching service, and casino service using an in-hotel intranet are provided through the respective servers or telephone switchboard.

The restaurant 3 is connected through a terminal (not shown) to the house card server, which manages the settlement account of the lodger on the basis of use record at the restaurant. The bar 4 is connected through a terminal (not shown) to the house card server and a casino deposit server, each of which, on the basis of use record at the bar, manages the in-hotel settlement account and manages the deposit in the casino, respectively.

As for the casino 5, a slot machine and a player-facing table are connected to a PTS (player tracking system) server, and a chip dispenser/settlement machine 5 is connected to the casino deposit server, each of which provides casino game downloading service and manages the deposit in the casino, respectively.

The business model described above makes it possible to gain access to every facility in the hotel through the single integrated card 1d, and with the integrated card 1d settle accounts are electronized or become completely without cash or signature. For settling accounts, it may be arranged that a security code, of a four-digit number, for example, uniquely set by the user is also used, so that the intensity of security is enhanced. The security code may consist of not only numerals but also alphabetical letters or combination of them. The combination of numerals and alphabetical letters further enhances the degree of security (intensity of security) as it makes difficult for a third party to surmise.

Events given at the casino may be downloaded as required to a portable terminal lent to the lodger or to one belonging to the lodger. The portable terminal may be a portable telephone (or cellular phone), for example. In this way, a casino can be established with an in-hotel intranet, so that the lodger can participate in events while remaining in the guest room or the like without visiting the casino site. The events are preferably games that can be participated in by a large number of guests, such as a horse race, bicycle race, boat race, roulette, bingo, lottery, football, etc.

According to this system, the hotel can reduce management cost by improved efficiency in account settlement and reduced personnel expenses at the cashier of the hotel or casino, expedite account settlement without cash or signature, and provide careful and improved service according to the guest's information obtained at the time of checking in.

Convenience to the lodger is improved as the lodger can enjoy all the services in the hotel and casino without cash by simply carrying a single integrated card 1d that is a functional combination of all of the house card, PTS card, and the like. Using a non-contact IC as the integrated card 1d prevents scanning trouble from occurring. Setting an upper limit to the settlement account prevents the lodger from spending excessive money. Since the integrated card 1d also serves as the room key, the lodger is more likely to notice a theft or loss of the card, thereby improving security.

FIG. 2 is a block diagram showing an example of the system constitution of the integrated casino and hotel management system according to the invention.

As shown in FIG. 2, the integrated casino and hotel management system according to the invention is arranged that various facilities in the hotel: front desk 1, guest room 2, restaurant 3, bar 4, and casino 5 are commonly connected each other using the integrated system server 10 as the core through a LAN (local area network) 30 serving as communication network.

The integrated system server 10 is equipped for the integrated casino and hotel management system of this invention and is made up of : hotel server 11, house card server 12, service server 13, intra-service server 14, collection/analysis server 15, casino deposit server 16, PTS server 17, and multimedia server 18.

The hotel server 11 performs integrated management of the hotel operations, and the house card server 12 manages an integrated card 1d as a house card and an in-hotel settlement account.

The service server 13 makes reservations and issues tickets for shows and events according to the request by the lodger. The intra-service server 14 distributes casino games through the in-hotel intranet. The collection/analysis server 15 manages the tracing of movement of the lodger as a casino player and the distribution of the staff. The casino deposit server 16 manages deposit within the casino 5. The PTS server 17 provides game contents to the casino participant by allowing the casino participant to download casino games.

The multimedia server 18 distributes movies by video on-demand or game on-demand, or provides guidance on lodging account settlement in the guest room through an STB (set-top box) 21 installed in the guest room 2.

The front desk 1 is arranged that a front terminal 1a as the core is connected to a credit card terminal 1b and a card dispensing machine 1c. The front terminal 1a takes in various information of the lodger on the basis of guest book information registered at the front desk, writes the information as the guest property information to the integrated card 1d made as a non-contact IC card through the card dispensing machine 1c, and issues the card. The credit card terminal 1b is used for credit card settlement according to the lodger's facility use record recorded on the integrated card 1d presented by the lodger at the time of account settlement.

The guest room 2 is provided with an STB (set-top box) 21, a card reader/writer (R/W) 22, and a telephone 23. Using the STB 21, the lodger can view videos and games distributed from the multimedia server 18 on demand and settle the lodging account. Locking and unlocking the door can be made as the lodger brings the integrated card 1d near the card R/W 22. The telephone 23 is connected to a switchboard 20.

The restaurant 3 is provided with a cash register terminal 31 and a card R/W 32. The facility use record by the lodger inputted as the clerk operates the cash register terminal 31 is written to the integrated card 1d when the card is inserted into or brought near the card R/W 32.

The bar 4 is provided with a cash register terminal 41 and a card R/W 42. The facility use record by the lodger entered as the clerk operates the cash register terminal 41 is written to the integrated card 1d when the card is inserted into or brought near the card R/W 42. Plural countertops 43 and 44 are also connected, where a large screen monitor (not shown) is provided to make it possible to play casino games distributed by the intra-service server 14. Participation in the casino games is made through a portable terminal carried by the lodger.

At the site of the casino 5, where casino games actually take place, are placed: plural roulettes 51, 52, card tables 53, 54, slot machines 55, 56, 57, 58, and a chip dispenser/settlement machine 50.

There, operations related to games including exchanging coins and chips are completely automated to achieve consistent services from guest management to guest guidance. In other words, to permit table-top games such as roulette and card games go on under the complete management of the presenter without any human intervention such as by a dealer, ID tags (non-contact IC chips) are embedded in the chips and cards used, for automatic detection and preventing deceitful acts.

As described above, the intra-service server 14 makes it possible for the lodger to participate in games while remaining in the guest room 2 or being at ease in the bar 4 or the like, without visiting the casino site.

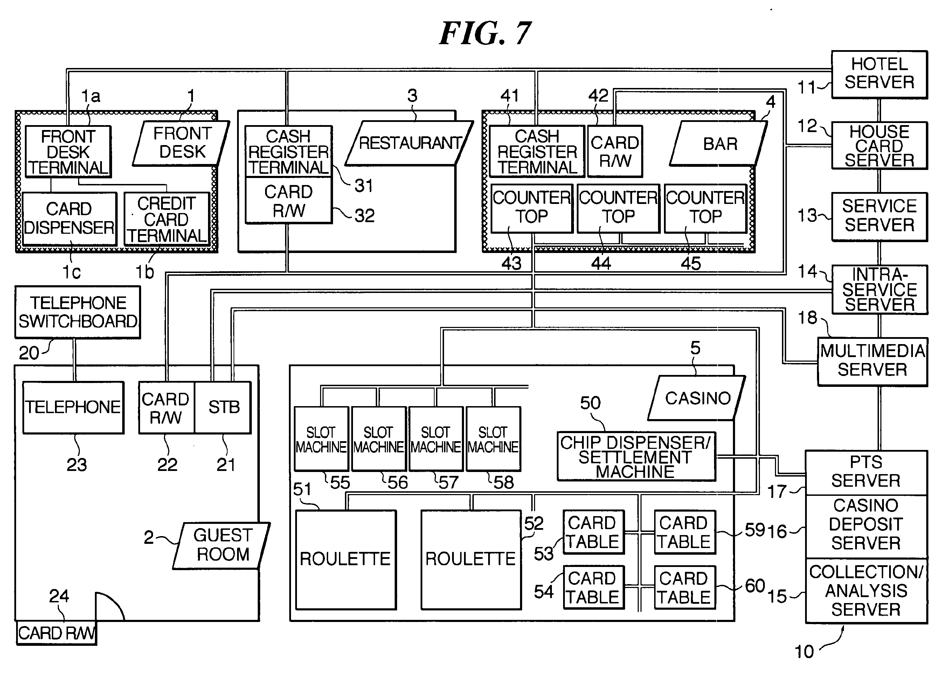

FIG. 7 is a block diagram cited for explaining the constitution of physical interconnection between the integrated system server 10 and the terminals placed in various facilities in the hotel: front desk 1, guest room 2, restaurant 3, bar 4, and casino 5. Functions of the respective servers are the same as those shown in FIG. 2 and not explained again here to avoid redundancy. For the purpose of comparison, FIG. 8 shows a conventional example of the constitution of connection in which the hotel account settlement system and the casino account settlement system are present independently.

The hotel server 11, house card server 12, and service server 13 shown in FIG. 7 function as user management servers for managing users of the hotel. Managing the hotel user is, for example, managing account settlement at the time of checking out. To put it more concretely, it includes recording the details of the hotel user registered in the guest book at the time of checking in, recording purchase history such as when the user is provided with services, meals, or the like or when the user uses facilities in the hotel, and managing account settlement to be made at the time of checking out. In principle, the hotel user need not pay or receive cash while the user stays in the hotel. The management is cashless as it is called. The collection/analysis server 15, the casino deposit server 16, the PTS server 17, and the multimedia server 18 function as game servers for managing casino game-related services played in the hotel. Managing the casino game-related services is, for example, managing account settlement when a player plays in the casino. To put it more concretely, it includes recording stakes for every player, recording points scored in the game when the player wins, and managing account settlement on the basis of the record when one game is over. As in the management of the hotel user, there is no need in principle for the player to pay or receive cash during the play. It is also the so-called cashless management. The intra-service server 14 serves as a casino providing server that gives event information on the casino games to the users and provides event services to those users who want to participate.

Incidentally the functional assignments to the servers as described above are not always necessary but may be appropriately changed in number and constitution according to the scale of the hotel and casino.

FIG. 3 is a block diagram showing an essential part of the integrated server system 10 shown in FIG. 1 and FIG. 2 as an embodiment of this invention.

The integrated server system 10 shown here is made up of: an event guiding means, an event execution management means, a point exchanging means, a guest information DB, and an event information DB, and is connected to a portable terminal 70, lent to or belonging to the lodger and to a large screen monitor 80 through a LAN 30 serving as a communication network. Incidentally, the LAN 30 used here is assumed to be a wireless LAN. However, it may be wired.

The event guiding means 101 gives information on the events played in the casino to the portable terminal 70 carried by the lodger chosen according to the property of the lodger registered on the guest information DB 104.

The event execution management means 102 provides event services related to games using the portable terminal 70 or the large screen monitor 80 as an interface. The event execution management means 102 displays the event details on the large screen monitor 80 placed in the site and manages execution of event services by interacting through the portable terminal 70 carried by each lodger.

The point exchanging means 103 has the function of reflecting the points scored as the lodger participates in games on settling the charges at the casino or hotel. Points are given as the player wins in events. As the player loses, points or stakes are subtracted. Points have a value corresponding to amount of cash. Points scored in events are accumulated and the accumulated points may be exchanged with medals that can be used in the casino, beverage coupons, or commodities such as cigarettes, as a matter of course, and may also be used for using hotel facilities and receiving services.

To the guest information DB 104 are registered guest book data (whether the lodging party is individual or group, nationality, age, a VIP or not, etc.) given by the lodger at the time of checking in, and are also written: an in-hotel settlement account, information on use history of in-hotel facilities including the casino and on play history (number of medals obtained, number of games participated in, numbers of wins and losses, name (nickname), nationality, etc.), and information on personal preference and/or user data and the like determined as a result of analyzing the above data. To the event information DB 105 are written: use history of the casino by the lodger as a player, types of games participated in, gained points (point account), etc.

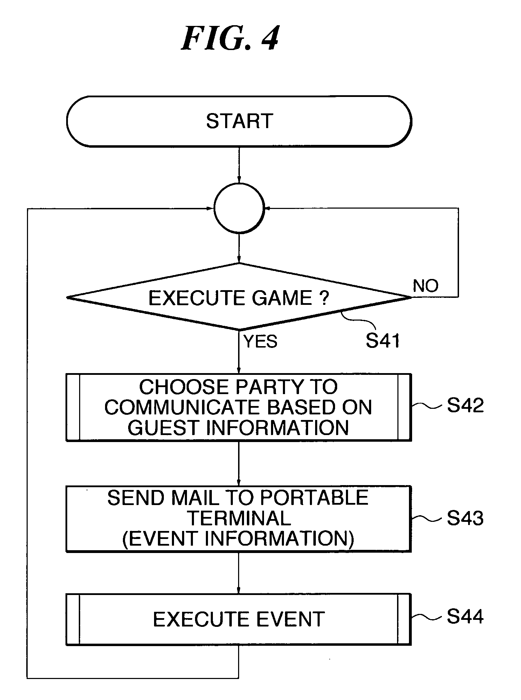

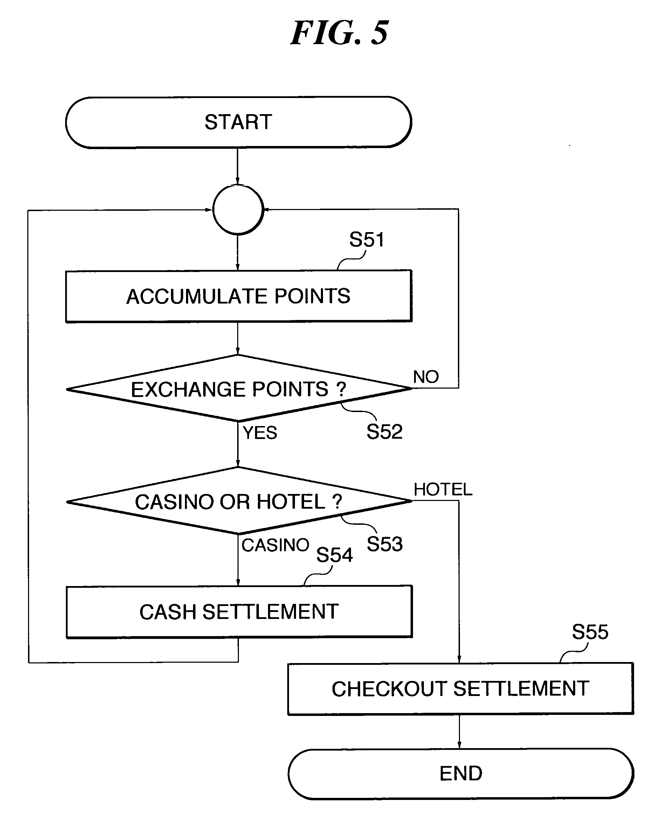

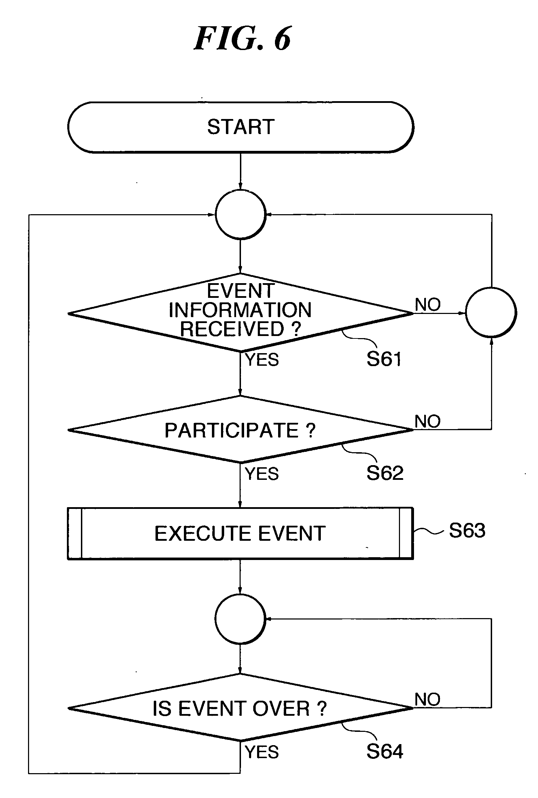

FIG. 4 and FIG. 5 are flowcharts for explaining the operations of providing events and exchanging points, respectively, by means of the integrated system server. FIG. 6 is a flowchart for explaining the operation of participating in events using the portable terminal.

Detailed operations of the integrated system server 10 and the portable terminal 70 will be described below in reference to the flowcharts shown in FIG. 4 to FIG. 6.

The hotel (casino service provider), when giving an event (S41), refers to the guest information DB 104 and chooses a party (lodger) to be notified according to the guest's property such as preference and/or user data (S42), and send an e-mail giving event information to the portable terminal 70 carried by the chosen party (S43) to invite the party to participate in the event. The user's preference and/or user data can be estimated from the manner of use (purchased items, play history, etc.).

As described above, the lodger is provided in advance with a portable terminal 70 to receive event information (S61). A lodger who wants to participate in the event expresses intention of participation by operating the portable terminal 70 in hand (S62).

The hotel displays events which it presents on the large screen monitor 80 installed at the site of the casino 5, in the bar 4, or the like, so that many lodgers can participate simultaneously (S44). Events may also be distributed and displayed on the screen of the portable terminal 70 carried by the lodger.

Events go on as the lodger participates in games by operating the portable terminal 70 as a communication tool (S63).

In case the event is a horse race game, for example, a lodger that participates in the game operates the portable terminal 70 to choose expected horses and watch the race using the large screen monitor 80 or the screen of the portable terminal 70 carried by the lodger.

In case the expectation comes true, scored points are accumulated in the point account of the lodger (S51). The accumulated points can be checked by referring to the point account stored in the event DB 105. The lodger can exchange the accumulated points, by simply presenting the integrated card 1d, with medals that can be used in the casino, beverage coupons, or the like. The lodger can also pay lodging charges including the use of hotel facilities such as room service and purchasing commodities in exchange for the points (S52). In this case, electronic value exchange is executed between the in-hotel settlement account written on the integrated card 1d and the DB.

The former is settled with the point exchanging means 103 at a casino casher (chip dispenser/settlement machine 50) (S53, S54). The latter is settled at the front desk 1 at the time of checking out (S53, S55).

While the above embodiment of the invention is described on the assumption that the wired LAN is used as the communication network that interconnects the servers 11 and 18 constituting the integrated system server 10 which integrates the servers, and interconnects the servers 11 to 18 and respective terminals 1a, 21, 31, 41 placed in the front desk 1, the guest room 2, the restaurant 3, the bar 4, and the casino 5, they may also be interconnected through a wireless LAN as in the case of the portable terminal carried by the user where performance of the wireless LAN is extended.

While the above embodiment of the invention only describes the casino service presented by the hotel using the intranet, it is also possible to allow access to the Internet from the guest room 2 and connect the settlement account to the Internet network, thereby allowing access from a remote place. In this way, an Internet casino can be established and run by the casino as a bookmaker. It is also possible to distribute live pictures of the casino to the guest room 2, and to provide finer point services because the casino and the hotel are integrated as a network.

While the above description is made on the assumption that the portable terminal 70 is lent to the lodger at the time of checking in. However, in case the lodger owns a portable terminal or a cellular telephone terminal, such a terminal may be used as a substitute.

According to the embodiment of the invention described above, the user management server and the game server make it possible to provide and manage practically all the services including use of the hotel such as lodging and casino games. The servers are connected to the portable terminal carried by the user through the communication network, and cooperate to provide services related to the casino games to the user through the portable terminal.

## Claims

1. An integrated casino and hotel management system, comprising:
a user management server for managing a user of a casino and a hotel;
a game server for managing services related to games;
a communication network for interconnecting the user management server and the game server; and
a portable terminal connected to the user management server and the game server through the communication network,
wherein the user management server and the game server provide services of the casino and the hotel through the communication network and the portable terminal.

2. The integrated casino and hotel management system according to claim 1, comprising:
a card dispenser for dispensing an integrated card to be distributed to the user at check-in, and to be issued when the user receives the services; and
a card reader/writer to write information to the integrated card and to read information from the integrated card.

3. The integrated casino and hotel management system according to claim 1 or 2, wherein the user management server comprises a casino providing server for providing event services related to the games to the user.

4. The integrated casino and hotel management system according to claim 3, wherein the casino providing server comprises:
event guiding means for giving information on events to the portable terminal, based on a guest property of the user; and
event execution management means for executing event services related to the games using the portable terminal as an interface.

5. The integrated casino and hotel management system according to claim 4, wherein the events are displayed on a monitor of the portable terminal.

6. The integrated casino and hotel management system according to claim 4 or 5, wherein the events provide the user with a point.

7. A casino and hotel system comprising:
an integrated casino and hotel management system according to any one of claims 1-6;
a hotel facility to be used by the user, the use being managed by the user management server; and
a casino for the user to play games in, the services related to the games being managed by the game server.

8. An integrated casino and hotel management server, comprising:
event guiding means for giving event information; and
event executing means for executing an event based on the event information.

9. The integrated casino and hotel management server according to claim 8, wherein the event execution management means displays the event.

10. The integrated casino and hotel management server according to claim 8 or 9, comprising point exchanging means for exchanging a point earned in the event.

11. A method of managing a casino and a hotel, comprising the steps of:
storing user data of a user of the casino and the hotel in a user management server;
transmitting the user data to a game server, so as to provide event information based on the user data; and
connecting a portable terminal carried by the user to the user management server and to the game server.

12. The method of managing a casino and a hotel according to claim 11, comprising the step of providing the user with services related to games.

13. The method of managing a casino and a hotel according to claim 12, wherein the services related to games comprise the steps of:
giving information on events to the portable terminal, based on the user data; and
executing event services related to the games using the portable terminal as an interface.

14. A casino and hotel management method comprising the steps of:
executing the integrated casino and hotel management method according to any one of claims 11-13;
managing the use of a hotel facility by the user by means of the user management server; and
managing services related to games played by the user in the casino by means of the game server.

15. An integrated casino and hotel management method using an integrated casino and hotel management server connected to a portable terminal carried by a user of the casino and the hotel through a communication network, comprising the steps of:
giving information on events related to casino games to the portable terminal carried by a user chosen according to the guest property of the user; and
executing event services related to the casino games using the portable terminal as an interface.
